# EUROPEAN PATENT SPECIFICATION

(11) **EP 1 024 947 B1**
(45) Date of publication and mention of the grant of the patent: **28.11.2001**
(21) Application number: 97936165.6
(22) Date of filing: 04.08.1997
(51) Int. Cl.: B29D 30/44

(54) **BALL SCREW TIRE TREAD GUIDE**
FÜHRUNGSVORRICHTUNG EINER REIFENLAUFFLÄCHE AUF BASIS EINER KUGELSPINDEL
GUIDE DE BANDE DE ROULEMENT DE PNEU A VIS A BILLES

(43) Date of publication of application: 09.08.2000
(73) Proprietor: THE GOODYEAR TIRE & RUBBER COMPANY, Akron, Ohio 44316-0001 (US)
(72) Inventor: CURRIE, William, Dudley, Stow, OH 44224 (US); HART, James, Michael, Akron, OH 44319 (US); MARKS, Patrick, David, Uniontown, OH 44685 (US)
(74) Representative: Leitz, Paul
(86) International application number: US9712870
(87) International publication number: WO9906205

(56) References cited:
- EP-A- 0 634 267
- FR-A- 2 225 277
- US-A- 3 413 174
- US-A- 3 949 920
- US-A- 4 261 786
- PATENT ABSTRACTS OF JAPAN vol. 018, no. 474 (M-1668), 5 September 1994 & JP 06 155193 A (NIPPON CHEMICON CORP), 3 June 1994,

## Description

### Technical Field

This invention relates to an apparatus for applying a constant centering force on the edges of tire tread rubber as it travels across an application conveyor to a tire drum. Conicity offset adjustment is also provided by adjusting the position of the center line of the tread relative to the center line of the tire building drum.

### Background Art

Apparatus for applying a uniform force perpendicular to the axis of the tread as it travels across an application conveyor toward a tire building drum is shown and described in US-A- 5,389,187. The method of applying the force is shown and described in US-A- 5,534,093. In accordance with the method and apparatus of these patents, the tread is conveyed on a conveyor between two self-centering guides which are slidably mounted on a frame positioned over the conveyor. The guides have parallel rows of rollers for engaging opposite edges of the tread and are urged toward the tread edges by a pneumatic, double-acting piston cylinder assembly connected to the guides by pulleys and cables. The piston cylinder assembly is connected to a centering screw for adjusting the position of the tread centerline.

US-A- 3,413,174 is directed to a conveyor apparatus having guide rolls for adjusting the longitudinal center line of the tread, however, no provision is made for accommodating a variable width of the tread. US-A-4,261,786 is directed to a conveyor apparatus having a pair of threaded shafts to rotate in threaded shoulder guides urging them towards the center of a tread with a motor rotating the shafts, however, there is no disclosure of a single ball screw extending between supporting frame members for moving two tire tread guides together and providing a continuous constant force against each side of a tire tread.

The publication Grundlagen der Pneumatik Auto Krausskopf-Verlag GmbH, Mainz sets forth the rotational momentum behavior of compressed air motors. With reference made to Figure 40 which shows characteristic curves of a compressed air motors has a function of "n" (rotation speed) there is no disclosure of using a pneumatic rotary actuator which does not rotate at a rotational speed, but only applies torque to a ball screw for urging nut members of guides toward the edges of a tread.

### Disclosure of Invention

The present invention is directed to apparatus for applying a constant centering force on the edges of tread rubber as it is carried by an application conveyor toward a tire building drum. The constant centering force is provided by a ball screw and nut assembly, with the ball screw torque controlled by a pneumatic rotary actuator connected to the screw. An adjustment sleeve provides conicity offset adjustment by moving the entire ball screw and nut assembly laterally along the axis of the ball screw whereby the position of the center line of the tread may be adjusted slightly relative to the center line of the tire building drum.

In accordance with one aspect of the invention, there is provided apparatus for conveying a tire tread comprising a conveyor with two guides extending over the conveyor and having rollers engageable with side edges of the tread, characterized by the guides having nut members engageable with a ball screw extending between supporting frame members for moving the guides together or apart by rotating the ball screw and torque applying means including a pneumatic rotary actuator connected to the ball screw for applying torque to the ball screw to urge a nut member of a first one of the guides toward a first edge of the tread and a nut member of a second one of the guides toward a second edge of the tread and the torque applying means including a pneumatic rotary actuator connected to the ball screw providing a continuous constant force at each side of the tire tread by the rollers while in contact with the tread regardless of the variation in width of the tread, a clutch mounted between the ball screw and the pneumatic rotary actuator at a first end of the ball screw and manual means to rotate the screw mounted at a second end of the screw whereby the initial spacing of the guides may be provided by manually rotating the ball screw and whereby the torque forces may be applied by actuating the clutch to engage the pneumatic rotary actuator. Further embodiments of the invention are defined in the dependent claims.

### Brief Description of Drawings

Fig. 1 is a plan view partly in section of the tread centering apparatus embodying the invention with the conveyor deleted taken along the plane of line 1-1 in Fig. 2.
Fig. 2 is a sectional view of the apparatus shown in Fig. 1 with the conveyor taken along the plane of line 2-2 in Fig. 1.
Fig. 3 is a sectional view taken along the line 3-3 in Fig. 2.
Fig. 4 is an enlarged fragmentary sectional view showing the ball screw nuts and the balls with the left-hand and right-hand grooves of the ball screw.

### Detailed Description of the Invention

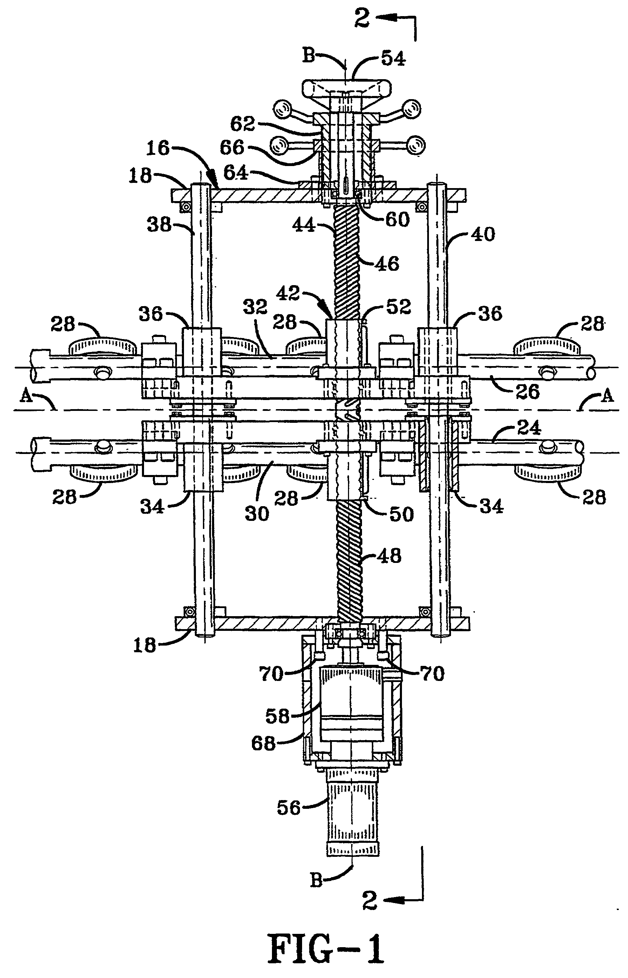

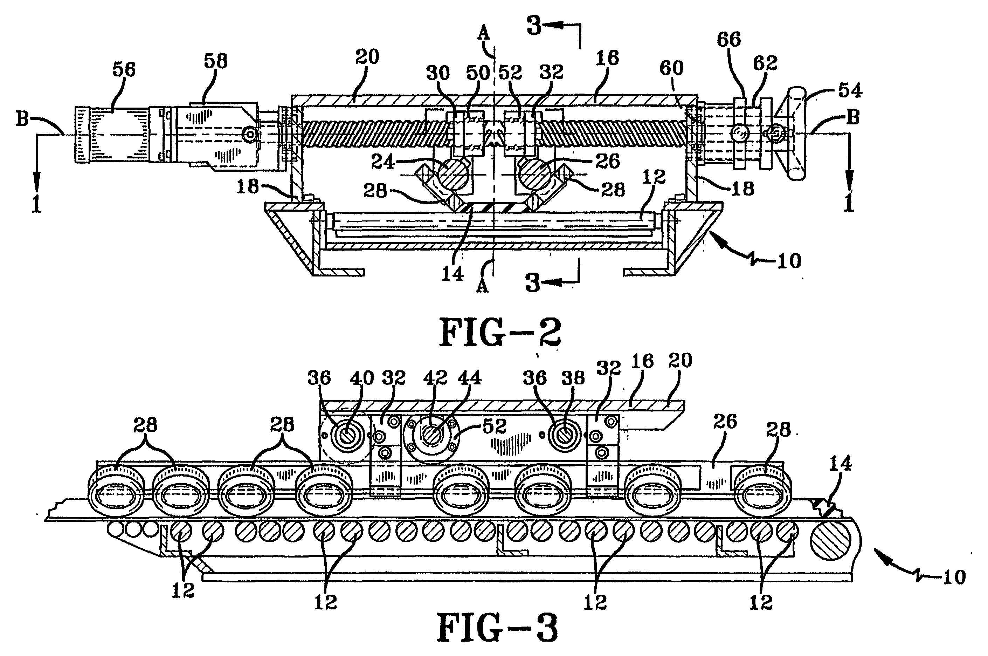

Referring to Figs. 2 and 3, a tread application conveyor 10 is shown having rollers 12 for supporting a tread 14 as it travels over the conveyor towards a tire building drum (not shown). A frame 16, having side members 18 and a top member 20, is mounted on the conveyor 10 and positioned over the conveyor. As shown in Fig. 1, two guides such as long rod assemblies 24 and 26 with ball bearing rollers 28 are suspended in housings 30 and 32 positioned above either side of the tread 14. The angular orientation of the rod assemblies 26 may be adjusted to place the rollers 28 in optimum locations to engage the shoulders of the tread 14. The housings 30 and 32 have bushings 34 and 36 slidably mounted on linear ways or rods 38 and 40 clamped to the side members 18 of carrier frame 16.

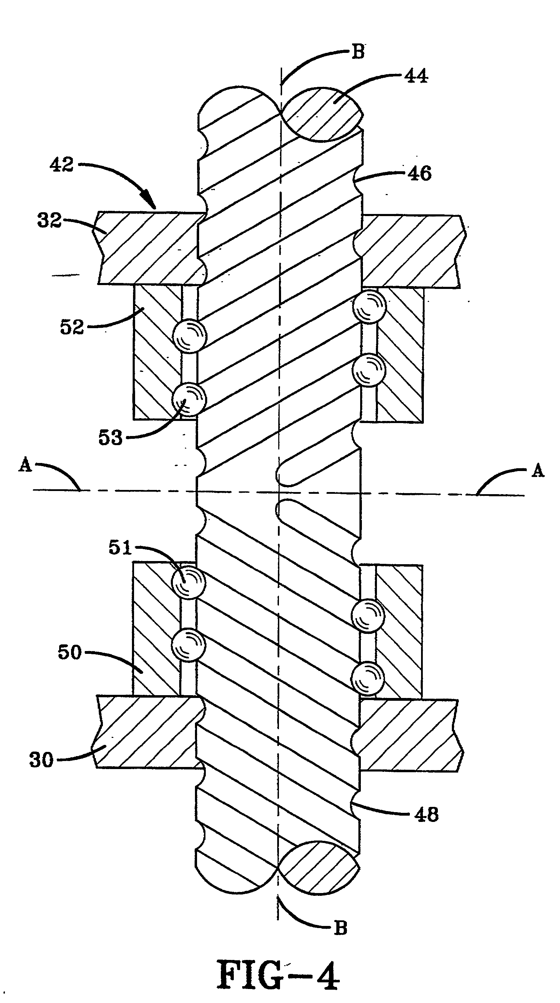

A ball screw assembly 42 is positioned between the rods 38 and 40 generally at the center of the tread guiding apparatus. A ball screw 44, shown more clearly in Fig. 4, is divided at its center line A-A into right-hand threads 46 at one side, and left-hand threads 48 at the other side. A left-hand ball screw nut 50 having a ball 51 is attached to the left-hand housing 30. A right-hand ball screw nut 52 having a ball 53 is attached to the right-hand housing 32. Accordingly, when the ball screw 44 is rotated the relative distance between the housings 30 and 32 will be increased or decreased. A hand wheel 54 is mounted at one end of the ball screw 44 and a torque applying means, such as a pneumatic rotary actuator 56, is mounted at the other end of the screw 44. A clutch 58 is positioned between the ball screw 44 and the pneumatic rotary actuator 56.

Referring to Figs. 1 and 2 a screw support bearing 60 is positioned inside a conicity adjustment sleeve 62 having external threads in mating engagement with threads on a mounting bracket 64, which is attached to one of the side members 18 of the frame 16. A lock nut 66 may be provided to hold the adjustment sleeve 62 in place. In order to adjust the rod housings 28 and 30 laterally along the axis B-B of the ball screw 44, the lock nut 66 may be loosened and the conicity adjustment sleeve 62 rotated in the desired direction. This adjustment is used to move the center line of the tread 14 slightly from the center line of the tire building drum to improve conicity readings and is referred to as the "conicity offset adjustment."

At the other end of the ball screw 44 from the conicity adjustment sleeve 62 a housing 68 holding the rotary actuator 56 and surrounding the clutch 58 is slidably mounted on shoulder screws 70, threaded in the other one of the side members 18 of the frame 16, permitting the housing to move relative to the frame during the conicity offset adjustment.

In operation, the ball screw 44 provides width adjustment and centering for the self-centering rod assemblies 24 and 26. Adjustment of the distance between the rod assemblies 24 and 26 is provided by disengaging the clutch 58 and rotating the ball screw with the hand wheel 54 until the rod assemblies 24 and 26 reach the desired spacing. Preferably this is a setting which spaces the rollers 28 at a distance slightly narrower than the width of tread 14. The clutch 58 may then be engaged, coupling the ball screw 44 to the rotary actuator 56 to drive the rod assemblies 24 and 26 towards the center line A-A and providing centering of the rod assemblies 24 and 26.

In addition to centering, the tread guide of this invention utilizes the ball screw 44 to hold the housings 30 and 32 in a position with torque applied to the end of the ball screw by the pneumatic rotary actuator 56. This torque provides resistance to rotation of the ball screw 44 as the edges of the tread 44 press against the rollers 28 in a direction to open the space between the rollers. The torque provided may be changed by changing the air pressure in the pneumatic rotary actuator 56.

Before the tread 14 reaches the guide rollers 28 on the conveyor 10, the shaft of the pneumatic rotary actuator 56 may be positioned at one limit of its 280 degree travel, placing the housings 30 and 32 and rollers 28 at a spaced distance apart slightly less than the width of the tread. When the tread 14 reaches the rollers 28 and the edges make contact with the rollers, the rollers will be forced to open slightly. Contact with the rollers 28 at the left-hand housing 30 causes the ball 51 of the ball nut 50 to move along the axis B-B of the screw 44 in a direction away from the centerline A-A of the ball screw 44 rotating the screw so that the right-hand ball screw nut 52 is moved by a ball 53 of the ball nut 52 causing the right-hand housing 32 with the rollers 23 to be moved in the opposite direction. Large lead on the ball screw 44 make it possible to translate linear motion into rotary motion due to the mechanical efficiency of the screw and nut combination. As the housings 30 and 32 are forced open, the restoring torque force applied by the rotary actuator 56 attempting to close them remains constant. This constant force allows the tread 14 to be stretched uniformly over its length as it is delivered on center to the tire building drum.

## Claims

1. Apparatus for conveying a tire tread (14) comprising a conveyor (10) with two guides (24,26) extending over said conveyor (10) and having rollers (28) engageable with opposite side edges of said tread (14), said guides (24,26) having nut members (50,52) engageable with ball screws extending between supporting frame members (18) for moving said guides (24,26) together or apart by rotating said ball screws and torque applying means connected to said ball screws for applying torque to said ball screws to urge a nut member (50) of a first one of said guides towards a first edge of said tread (14) and a nut member (52) of a second one of said guides (24) towards a second edge of said tread (14), **characterized in that** the torque applying means includes a pneumatic rotary actuator (56) connected to a single ball screw (44) providing a continuous constant force against each side of said tire tread (44) by said rollers (28) while in contact with said tread (14) regardless of the variation in width of said tire tread, a clutch (58) mounted between said single ball screw (44) and said pneumatic rotary actuator (56) at a first end of said single ball screw (44) and manual means (62) to rotate said single ball screw (44) mounted at a second end of said single ball screw (44) whereby the initial spacing of said guides (24,26) may be provided by manually rotating said single ball screw (44) and whereby the torque forces may be applied by actuating said clutch (58) to engage said pneumatic rotary actuator (56).

2. Apparatus in accordance with claim 1 wherein said ball screw (44) has a large lead whereby linear motion of said nut members (50,52) is translated into rotary motion due to the mechanical efficiency of the combination of said screw (44) and said nut members (50,52).

3. Apparatus in accordance with claim 1 further **characterized by** conicity adjustment means (62) for moving said ball screw (44) with said guides (24,26) laterally along the axis B-B of said ball screw (44) to adjust the position of the center line A-A of the tread (14) on said conveyor (16).

4. Apparatus in accordance with claim 3 further **characterized by** said conicity adjustment means (62) comprising an adjustment sleeve (62) in threaded engagement with a screw support bearing (60) in one of said frame members (16).

5. Apparatus in accordance with claim 1 further **characterized by** each of said guides (24,26) having a rod (38,40), a plurality of rollers (28,30) mounted on said rod (38,40) for rotation in engagement with a slanted edge of said tire tread (14) and means for tilting the rotational axis of said rollers (38,40) to correspond with the slanted edges of said tire tread (14).

6. Apparatus in accordance with claim 1 further **characterized by** said guides (24,26) being slidably supported on rods (38,40) mounted on said frame members (16,18) parallel to and spaced from said ball screw (44) whereby substantially all the weight of said guides (24,26) is carried by said rods.

7. Apparatus in accordance with claim 1 further **characterized by** conicity adjustment means (62) for moving said ball screw (44) with said guides (24,26) laterally along an axis B-B of said ball screw (44) to adjust the position of the center line A-A of the tread (14) on said conveyor (10).

8. Apparatus in accordance with claim 7 further **characterized by** said conicity adjustment means comprising an adjustment sleeve (62) in threaded engagement with a screw support bearing (60) in one of said frame members (16,18).

## Patentansprüche

1. Vorrichtung zum Befördern eines Reifenlaufstreifens (14), umfassend eine Fördereinrichtung (10) mit zwei Führungen (24, 26), die sich über der Fördereinrichtung (10) erstrecken und die Rollen (28) aufweisen, die mit entgegengesetzten Seitenrändern des Laufstreifens (14) in Eingriff stehen können, wobei die Führungen (24, 26) Mutter-nelemente (50, 52) aufweisen, die mit Kugelumlaufspindeln in Eingriff gelangen können, die sich zwischen Trägerrahmenelementen (18) erstrecken, um die Führungen (24, 26) aufeinander zu oder voneinander weg zu bewegen, indem die Kugelumlaufspindeln gedreht werden, und ein Drehmomentaufbringungsmittel, das mit den Kugelumlaufspindeln verbunden ist, um Drehmoment auf die Kugelumlaufspindeln aufzubringen und somit ein Mutternelement (50) von einer ersten der Führungen in Richtung eines ersten Randes des Laufstreifens (14) zu drängen und ein Mutternelement (52) von einer zweiten der Führungen (24) in Richtung eines zweiten Randes des Laufstreifens (14) zu drängen, **dadurch gekennzeichnet, daß** das Drehmomentaufbringungsmittel umfaßt: einen pneumatischen Drehaktuator (56), der mit einer einzigen Kugelumlaufspindel (44) verbunden ist und eine kontinuierliche konstante Kraft auf jede Seite des Reifenlaufstreifens (44) durch die Rollen (28) aufbringt, während sie in Kontakt mit dem Laufstreifen (14) stehen, ungeachtet der Schwankung der Breite des Reifenlaufstreifens, eine Kupplung (58), die zwischen der einzigen Kugelumlaufspindel (44) und dem pneumatischen Drehaktuator (56) an einem ersten Ende der einzigen Kugelumlaufspindel (44) montiert ist, und ein Handbetätigungsmittel (62), um die einzige Kugelumlaufspindel (44) zu drehen, das an einem zweiten Ende der einzigen Kugelumlaufspindel (44) montiert ist, wobei der ursprüngliche Abstand der Führungen (24, 26) bereitgestellt werden kann, indem die einzige Kugelumlaufspindel (44) von Hand gedreht wird, und wobei die Drehmomentkräfte durch Betätigen der Kupplung (58) aufgebracht werden können, um den pneumatischen Drehaktuator (56) in Eingriff zu bringen.

2. Vorrichtung nach Anspruch 1, wobei die Kugelumlaufspindel (44) eine große Steigung aufweist, wodurch aufgrund der mechanischen Effizienz der Kombination aus der Spindel (44) und den Mutternelementen (50, 52) eine geradlinige Bewegung der Muttemelemente (50, 52) in eine Drehbewegung umgesetzt wird.

3. Vorrichtung nach Anspruch 1, ferner **gekennzeichnet durch** ein Konizitätseinstellmittel (62) zum Bewegen der Kugelumlaufspindel (44) mit den Führungen (24, 26) seitlich entlang der Achse B-B der Kugelumlaufspindel (44), um die Lage der Mittellinie (A-A) des Laufstreifens (14) auf der Fördereinrichtung (16) einzustellen.

4. Vorrichtung nach Anspruch 3, ferner **dadurch gekennzeichnet, daß** das Konizitätseinstellungsmittel (62) eine Einstellhülse (62) in Gewindeeingriff mit einem Spindeltraglager (60) in einem der Rahmenelemente (16) umfaßt.

5. Vorrichtung nach Anspruch 1, ferner **dadurch gekennzeichnet, daß** jede der Führungen (24, 26) einen Stab (38, 40), eine Vielzahl von Rollen (28, 30), die an dem Stab (38, 40) zur Drehung in Eingriff mit einem abgeschrägten Rand des Reifenlaufstreifens (14) montiert sind, und ein Mittel zum Kippen der Drehachse der Rollen (38, 40) gemäß den abgeschrägten Rändern des Reifenlaufstreifens (14) aufweist.

6. Vorrichtung nach Anspruch 1, ferner **dadurch gekennzeichnet, daß** die Führungen (24, 26) verschiebbar auf Stäben (38, 40) getragen sind, die an den Rahmenelementen (16, 18) parallel zu und beabstandet von der Kugelumlaufspindel (44) montiert sind, wodurch im wesentlichen das gesamte Gewicht der Führungen (24, 26) durch die Stäbe getragen ist.

7. Vorrichtung nach Anspruch 1, ferner **gekennzeichnet durch** ein Konizitätseinstellmittel (62) zum Bewegen der Kugelumlaufspindel (44) mit den Führungen (24, 26) seitlich entlang einer Achse (B-B) der Kugelumlaufspindel (44), um die Position der Mittellinie (A-A) des Laufstreifens (14) auf der Fördereinrichtung (10) einzustellen.

8. Vorrichtung nach Anspruch 7, ferner **dadurch gekennzeichnet, daß** das Konizitätseinstellungsmittel eine Einstellhülse (62) in Gewindeeingriff mit einem Spindeltraglager (60) in einem der Rahmenelemente (16, 18) umfaßt.

## Revendications

1. Appareil pour transporter une bande de roulement de bandage pneumatique (14) comprenant un transporteur (10) muni de deux guides (24, 26) s'étendant par-dessus ledit transporteur (10) et comportant des rouleaux (28) aptes à entrer en contact avec les bords latéraux opposés de ladite bande de roulement (14), lesdits guides (24, 26) possédant des éléments en forme d'écrous (50, 52) dans lesquels viennent s'insérer des vis à billes s'étendant entre des éléments de bâti de support (18) pour déplacer lesdits guides (24, 26) de manière conjointe ou de manière séparée en faisant tourner lesdites vis à billes, et un moyen d'application de couple relié auxdites vis à billes pour appliquer un couple sur lesdites vis à billes afin de presser un élément en forme d'écrou (50) du premier desdits guides en direction d'un premier bord de ladite bande de roulement (14) et un élément en forme d'écrou (52) du second desdits guides (24) en direction d'un second bord de ladite bande de roulement (14), **caractérisé en ce que** le moyen d'application de couple englobe un actionneur rotatif pneumatique (56) relié à une vis unique à billes (44) procurant une force constante continue contre chaque côté de ladite bande de roulement (14) via lesdits rouleaux (28) au cours de la mise en contact avec ladite bande de roulement (14) sans prendre en compte la variation de largeur de ladite bande de roulement de bandage pneumatique, un embrayage (58) monté entre ladite vis unique à billes (44) et ledit actionneur rotatif pneumatique (56) à une première extrémité de ladite vis unique à billes (44) et un moyen manuel (62) pour faire tourner ladite vis unique à billes (44) monté à une deuxième extrémité de ladite vis unique à billes (44), par lequel l'écartement initial desdits guides (24, 26) peut être fourni en faisant tourner à la main ladite vis unique à billes (44), et par lequel les forces de couple peuvent être appliquées en actionnant ledit embrayage (58) pour mettre en prise ledit actionneur rotatif pneumatique (56).

2. Appareil selon la revendication 1, dans lequel ladite vis à billes (44) possède un grand pas, par lequel le mouvement linéaire desdits éléments en forme d'écrous (50, 52) est soumis à une translation pour obtenir un mouvement rotatif grâce au rendement mécanique de la combinaison de ladite vis (44) et desdits éléments en forme d'écrous (50, 52).

3. Appareil selon la revendication 1, **caractérisé en outre par** un moyen de réglage de la conicité (62) pour déplacer ladite vis à billes (44) avec lesdits guides (24, 26) latéralement le long de l'axe B-B de ladite vis à billes (44) afin de régler la position de la ligne médiane A-A de la bande de roulement (14) sur ledit transporteur (16).

4. Appareil selon la revendication 1, **caractérisé en outre par le fait que** ledit moyen de réglage de la conicité (62) comprend un manchon de réglage (62) en contact par filet de vis avec un palier de support de vis (60) dans un desdits éléments de bâti (16).

5. Appareil selon la revendication 1, **caractérisé en outre par le fait que** chacun desdits guides (24, 26) possède une tige (38, 40), plusieurs rouleaux (28, 30) montés sur ladite tige (38, 40) à des fins de rotation en contact avec un bord incliné de ladite bande de roulement de bandage pneumatique (14), ainsi qu'un moyen pour incliner l'axe de rotation desdits rouleaux (38, 40) à des fins de correspondance avec les bords inclinée de ladite bande de roulement de bandage pneumatique (14).

6. Appareil selon la revendication 1, **caractérisé en outre par le fait que** lesdits guides (24, 26) sont supportés en glissement sur des tiges (38, 40) montées sur ledit élément de bâti (16, 18) parallèlement à et à l'écart de ladite vis à billes (44), si bien qu'essentiellement tout le poids desdits guides (24, 26) est supporté par lesdites tiges.

7. Appareil selon la revendication 1, **caractérisé en outre par** un moyen de réglage de la conicité (62) pour déplacer ladite vis à billes (44) avec lesdits guides (24, 26) latéralement le long de l'axe B-B de ladite vis à billes (44) afin de régler la position de la ligne médiane A-A de la bande de roulement (14) sur ledit transporteur (10).

8. Appareil selon la revendication 1, **caractérisé en outre par le fait que** ledit moyen de réglage de la conicité comprend un manchon de réglage (62) en contact par filet de vis avec un palier de support de vis (60) dans un desdits éléments de bâti (16, 18).
